**Europäisches Patentamt**

**European Patent Office**

**Office européen des brevets**

(11) Publication number:

**0 084 951**
**B1**

# (12) EUROPEAN PATENT SPECIFICATION

(45) Date of publication of patent specification: **25.02.87**

(21) Application number: **83300261.1**

(22) Date of filing: **19.01.83**

(51) Int. Cl.⁴: **E 04 C 5/01, C 04 B 22/00**

(54) Preventing carbonation in concrete and the like.

(30) Priority: **21.01.82 GB 8201640**

(43) Date of publication of application:
**03.08.83 Bulletin 83/31**

(45) Publication of the grant of the patent:
**25.02.87 Bulletin 87/09**

(84) Designated Contracting States:
**AT CH DE GB LI**

(56) References cited:

**CHEMICAL ABSTRACTS, vol. 89, 1978, page 266, no. 64032g, Columbus, Ohio, USA HANS KÜHL: "Zement-Chemie" VEB Verlag Technik, Berlin, DE., Band III**

(73) Proprietor: **Madsen, Lief Widahl**
**15 Park Hill Rise**
**Croydon Surrey CR0 5JE (GB)**

(72) Inventor: **Madsen, Lief Widahl**
**15 Park Hill Rise**
**Croydon Surrey CR0 5JE (GB)**

(74) Representative: **Lawrence, Malcolm Graham et al**
**Malcolm Lawrence & Co. 9th Floor Terminus House Terminus Street**
**Harlow Essex CM20 1XF (GB)**

### Description

The invention relates to a method of preventing or reducing the carbonation which takes place in cement products such as concrete over a period.

Reinforced concrete is made by mixing cement, aggregate and water and curing the resulting mixture after shuttering around steel reinforcement members. Upon curing and attainment of full strength, the concrete is alkaline in nature with alkaline material in contact with the steel reinforcement members forming a passive layer which protects the steel from rusting by prevention of oxidation.

Over a period of time, however, it has been found that atmospheric carbon dioxide and moisture cause a carbonation reaction with alkaline material in the concrete and this reaction gradually consumes the sources of alkalinity. The carbonate reaction generally commences at the extremities of the concrete forming a gradually inwardly-moving interface between carbonated and alkaline regions of concrete. Ultimately the passive layer is destroyed and the reinforcement in the concrete becomes vulnerable to rusting, especially if the relative humidity is above 40%, initially rupturing the body of the concrete matrix because of the increased volume of the oxidation products but eventually corroding the steel to the point where the reinforcement is too weak to enable structural members made of the concrete to carry their design load.

The carbonation reaction is temperature-dependent so that in hot climates with high relative humidity, such as exist in the Middle East, corrosion of steel reinforcement in reinforced concrete structures occurs relatively soon after completion of the structure and can commonly bring about structural failure in buildings within ten years or less of completion.

The reaction also takes place more quickly in concrete which is relatively low in density due to air voids.

The carbonation reaction requires the presence of carbon dioxide which normally passes to the site of reaction by permeation through the concrete. With this in mind, attempts have been made to prevent the entry of carbon dioxide and oxygen into concrete by applying a surface coating as a carbon dioxide and oxygen barrier, for example a coating of an epoxy rexin composition. These attemps have been successful in prevention of carbon dioxide and oxygen's permeation but have involved considerable expenditure in terms of materials. Moreover, these attempts have resulted in problems caused by a build up of condensation of water vapour interstitially within reinforced concrete structures due to the moisture vapour barrier effect of the surface coating.

Certain compositions containing cement, sand, sodium carbonate and an organic acid have in the past been used successfully for waterproofing concrete surfaces such as floors, basement walls and water-retaining structures. It has now been found that these compositions can be used successfully to prevent carbon dioxide and oxygen's permeation into concrete structures whilst at the same time allowing the structure to breathe so that interstitial condensation of water is avoided. The invention is based on this finding.

The invention provides a method of treating a structure of cement-based material reinforced with members subject to corrosion in the absence of alkalinity, so as substantially to inhibit or completely to prevent consumption by carbonation reaction of alkaline material in the cement-based material, the structure having surfaces not exposed to water or airborne moisture and optionally surfaces so exposed and protected by a barrier to moisture and carbon dioxide with at least part of the non-exposed surfaces being open to penetration by airborne carbon dioxide, the method comprising applying over substantially all of said last mentioned surfaces a carbon dioxide barrier, characterized in that at least part of the air-contacting surfaces of the treated structure then carry a barrier layer which is permeable to outward passage of water vapour from the interstices of the structure and comprising a cement-based barrier composition containing an alkali metal carbonate and a carboxylic acid.

The method of invention is particularly applicable to iron- or steel-reinforced load-bearing concrete structures where the consequences of structural failure due to corrosion of reinforcement members is especially damaging. However, the method is also applicable to other cement-based structures. The method of invention is applicable as well to new structures as to older structures where the carbonation process has not yet done incurable damage.

The water vapour-permeable layer will normally constitute, as far as possible, the whole of the carbon dioxide barrier although part may be an alternative carbon dioxide and oxygen barrier material, for example bituminous or plastics coatings such as an epoxy resin composition. A water-tower, for example, may be provided on its internal water-contacting surfaces with a water-impermeable coating also serving as a carbon dioxide and oxygen barrier and on its external surfaces with a layer of the cement-based barrier composition.

The alkali metal carbonate in the cement-based barrier composition will normally be sodium carbonate.

The carboxylic acid will usually be a dibasic carboxylic acid, for example citric acid or tartaric acid, tartaric acid being most preferred.

The combined amount of alkali metal carbonate and carboxylic acid may be small, for example as low as 10 parts by weight per 3,000 parts by weight of other consituents with the charge of these two materials comprising, for example, 50% to 95% by weight sodium or other carbonate and 5% to 50% by weight of tartaric or other organic acid. However, for practically significant inhibition of the carbonation reaction the cement-based barrier composition will contain from 5% to 35% by weight sodium or other carbonate and 1% to 15% by weight carboxylic acid (e.g., tartaric acid). Especially preferred is the use of 7% to 15% carbonate and 1% to 10% carboxylic acid.

The balance of the cement-based barrier composition will normally comprise cement and a filler, together optionally with one or more additives, although cement only may make up the balance if so desired. The filler may be an aggregate filler, for example sand or another fine aggregate filler and/or a light-weight aggregate (e.g., hollow glass particles or exfoliated vermiculite). Fuel ash may be present as filler, particularly in combination with sand (e.g., 5% to 10% ash and a balance of sand). Pulverized waterglass may be present as filler.

Cement will in general make up from 35% to 75% by weight of the cement-based barrier composition (e.g., 40% to 60%, for example about 50%).

The cement-based barrier composition may include one or more additives for any desired special purpose. For example, a plasticizer or bonding agent may be present. Also additives such as sodium or potassium salts of methylsilicic acid can be used. The composition may furthermore include an anti-microbral agent such as a mixture of methylene-bis(4-chlorophenol); di(p-diethyl-amino)-triphenylcarbinol anhydride; chlorinated salicyl alcohol; o-chloro cresol; m-chloro toluene; m-chlorosalicylic acid sodium salt and polyoxy-methylene sorbitan monooleate.

A preferred form of cement-based barrier composition for use in the method of the invention comprises 45% to 55% by weight cement, 10% to 13% by weight carbonate, 1% to 3% by weight carboxylic acid and a balance consisting of filler.

Especially preferred is a composition comprising approximately 50% by weight cement, approximately 11.5% sodium carbonate, approximately 2% tartaric and a balance consisting of filler (e.g. sand and silica in proportions, for example, of about 5:1 by weight).

The cement-based barrier composition may normally be mixed up with water and applied by brushing, trowelling or spraying. Alternatively, the composition may be provided *in situ* when forming the reinforced structure, for instance as a powder either dusted or broadcast below concrete slabs or on top of same and then floated into the concrete.

The cement-based barrier composition will in general be in the form of a discrete layer of material serving as a carbon dioxide and oxygen barrier but it is possible also to use the composition as an additive to a concrete or sand/cement mixture.

The following specific Example sets forth a typical example of a formulation for use as a cement-based barrier composition in the method of the invention:—

| Constituent | % by weight |
| --- | --- |
| Cement | 50 |
| Silica sand | 30 |
| Filler | 5.75 |
| Sodium carbonate | 11.50 |
| Tartaric acid | 2.03 |
| Sodium siliconate | 0.72 |

The invention includes within its scope a method of making a building structure comprising steel- or iron-reinforced cement-based structural members which method includes provision of said structural members with a carbon dioxide and oxygen barrier comprising a cement-based barrier composition containing sodium or other alkali metal carbonate and tartaric or other carboxylic acid, the said barrier being applied as far as possible to all surfaces of the said building structure (if not covered by other carbon dioxide or vapour barrier) even if not exposed to rain or other moisture-laden weather element.

**Claims**

1. A method of treating a structure of cement-based material reinforced with members subject to corrosion in the absence of alkalinity, so as substantially to inhibit or completely to prevent consumption by carbonation reaction of alkaline material in the cement-based material, the structure having surfaces not exposed to water or airborne moisture and optionally surfaces so exposed and protected by a barrier to moisture and carbon dioxide with at least part of the non-exposed surfaces being open to penetration by airborne carbon dioxide, the method comprising applying over substantially all of said last-mentioned surfaces a carbon dioxide barrier, characterized in that at least part of the air-contacting surfaces of the treated structure then carry a barrier layer which is permeable to outward passage of water vapour from the interstices of the structure and which comprises a cement-based barrier composition containing an alkali metal carbonate and a carboxylic acid.

2. A method as claimed in Claim 1 wherein the cement-based barrier composition contains from 5% to 35% by weight sodium or other carbonate and from 1% to 15% by weight of carboxylic acid.

3. A method as claimed in Claim 1 or Claim 2 wherein the cement-based barrier composition comprises from 7% to 15% by weight sodium or other carbonate and from 1% to 10% by weight of carboxylic acid.

4. A method as claimed in any one of Claims 1—3 wherein the cement-based barrier composition comprises from 45% to 55% by weight cement, from 10% to 13% by weight sodium or other carbonate, from 1% to 3% by weight carboxylic acid and a balance consisting of filler.

**Patentansprüche**

1. Verfahren zur Behandlung des Gefüges eines Materials auf Zementbasis, das mit Verstärkungselementen versehen ist, die bei Abwesenheit einer Alkalinität der Korrosion unterworfen sind, um den durch Karbonisierung in dem Material auf Zementbasis bedingten Alkaliverbrauch wesentlich zu verringern oder völlig zu vermeiden, wobei das Gefüge Oberflächen aufweist, die Wasser oder Luftfeuchtigkeit nicht ausgesetzt sind und eventuell Oberflächen aufweist, die durch eine Sperre gegen Feuchtigkeit und Kohlendioxyd geschützt sind, von denen wenigstens ein Teil der nicht ausgesetzten Oberflächen gegen Eindringen durch Kohlendioxyd der Luft offen ist, wobei das Verfahren das Aufbringen einer Kohlendioxydsperre auf nahezu alle der zuletzt genannten Oberflächen beinhaltet, dadurch gekennzeichnet, daß wenigstens ein Teil der mit Luft in Berührung stehenden Oberflächen des behandelten Gefüges dann eine Sperrschicht trägt, die von den Fugen des Gefüges her nach außen wasserdampfdurchlässig ist und die aus einer Zusammensetzung einer Sperre auf Zementbasis besteht, die ein Alkali-Metall-Karbonat und Karbonsäure enthält.

2. Verfahren nach Anspruch 1, bei dem die Zusammensetzung der Sperre auf Zementbasis 5—35 Gewichtsprozent Soda oder ein anderes Karbonat und 1 bis 15 Gewichtsprozent Karbonsäure aufweist.

3. Verfahren nach Anspruch 1 oder 2, wobei die Zusammensetzung der Sperre auf Zementbasis 7—15 Gewichtsprozent Soda oder ein anderes Karbonat und 1—10 Gewichtsprozent Karbonsäure aufweist.

4. Verfahren nach einem der Ansprüche 1—3, wobei die Zusammensetzung der Sperre auf Zementbasis 45—55 Gewichtsprozent Zement, 10—13% Soda oder ein anderes Karbonat, 1—3 Gewichtsprozent Karbonsäure und einen Ausgleich bestehend aus Füllstoff enthält.

**Revendications**

1. Procédé pour traiter une structure en matériau à base de ciment renforcé par des pièces qui sont en l'absence d'alcalinité soumises à une corrosion, servant à retarder essentiellement où à empêcher entièrement la consommation du matériau alcalique par une réaction de carbonisation dans le matériau à base de ciment, la dite structure ayant des surfaces n'étant ni exposées à de l'eau ni à l'humidité de l'air, et éventuellement des surfaces exposées ainsi et protegées par une barrière contre l'humidité et gaz carbonique, au moins des parties de surfaces non-exposées étant ouvertes à la pénétration du gaz carbonique contenu dans l'air, le procéde comprenant l'application d'une barrière contre le gaz carbonique sur essentiellement toutes les surfaces mentionnées en dernier, caractérisé en ce que au moins des parties des surfaces de la structure traitée portent une couche formant une barrière qui est pénétrable vers l'extérieur par la vapeur d'eau des vides de la structures et qui contient une composition de matière à base de ciment contenant un carbonate de métal alcalique et un acide carboxylique.

2. Procédé selon la revendication 1, caractérisé en ce que la composition de barrière basée à base de ciment contien de 5% à 35% en poids de carbonate de sodium ou d'un autre carbonate et de 1% à 15% en poids d'acide carboxylique.

3. Procédé selon la revendication 1 ou 2, caractérisé en ce que la composition de barriére à base de ciment contient de 7% à 15% en poids de carbonate de sodium ou d'un autre carbonate et de 1% à 10% en poids d'acide carboxylique.

4. Procédé selon l'une des revendications 1 à 3, caractérisé en ce que la composition de barrière à basé de ciment contient de 45% à 55% en poids de ciment, de 10% à 13% en poids de carbonate de sodium ou d'un autre carbonate, de 1% à 3% en poids d'acide carboxylique et une balance consistant en une matière de remplissage.